# EUROPÄISCHE PATENTSCHRIFT

(11) **EP 3 571 471 B1**
(45) Veröffentlichungstag und Bekanntmachung des Hinweises auf die Patenterteilung: **05.03.2025**
(21) Anmeldenummer: 18700147.4
(22) Anmeldetag: 10.01.2018
(51) Int. Cl.: G01C 21/32, G01C 21/00, G08G 1/0968

(54) **VERFAHREN UND ZENTRALSYSTEM ZUM BEREITSTELLEN VON HOCHGENAUEN KARTENDATEN AN EIN KRAFTFAHRZEUG**
METHOD AND CENTRAL SYSTEM FOR PROVIDING HIGHLY ACCURATE MAP DATA TO A MOTOR VEHICLE
PROCÉDÉ ET SYSTÈME CENTRAL PERMETTANT DE FOURNIR DES DONNÉES CARTOGRAPHIQUES HAUTE PRÉCISION À UN VÉHICULE AUTOMOBILE

(30) Priorität: 20.01.2017 DE 102017200912
(43) Veröffentlichungstag der Anmeldung: 27.11.2019
(73) Patentinhaber: Bayerische Motoren Werke Aktiengesellschaft, 80809 München (DE)
(72) Erfinder: JURK, Reinhard, 82194 Groebenzell (DE)
(86) Internationale Anmeldenummer: PCT/EP2018/050496
(87) Internationale Veröffentlichungsnummer: WO 2018/134090

(56) Entgegenhaltungen:
- DE-A1- 102008 053 531
- DE-A1- 102008 053 531
- US-A1- 2014 278 055
- US-A1- 2014 278 055
- US-A1- 2016 028 824
- US-A1- 2016 028 824
- US-A1- 2016 102 988
- US-A1- 2016 102 988

## Beschreibung

### Technisches Gebiet

Die Erfindung betrifft Systeme, bei denen Kartendaten auf Anfrage von einer Zentraleinheit an ein Fahrzeug übermittelt werden, um im Fahrzeug bestimmte Fahrfunktionen auszuführen. Weiterhin betrifft die vorliegende Erfindung Maßnahmen, die Kartendaten durch von Fahrzeugen erfassten Fahrzeugdaten zu aktualisieren.

### Technischer Hintergrund

Für den Betrieb von Navigationssystemen sind in Kraftfahrzeugen Kartenspeicher zum Speichern von Kartendaten vorgesehen. Die Kartendaten stellen eine digitale Repräsentation eines Streckennetzes dar und können darüber hinaus Zusatzinformationen aufweisen, wie z.B. Geschwindigkeitsbeschränkungen und dergleichen.

Für teil- oder vollautomatisiertes Steuern von Kraftfahrzeugen werden jedoch Kartendaten in einer Genauigkeit und Aktualität benötigt, die über die Genauigkeit und Aktualität der herkömmlich im Kraftfahrzeug bereitgestellten Fahrzeug-Kartendaten hinausgeht. Ferner sind Informationen über Streckenumgebungen, wie z.B. Randbebauungen und Baustellen, notwendig, die bisher nicht in ausreichendem Maße in den Fahrzeug-Kartendaten vorhanden sind. Daher sehen Systeme für das teil- oder vollautomatisierte Fahren vor, solche Steuerungs-Kartendaten von einem Zentralsystem abzurufen, mit der das Kraftfahrzeug in Kommunikationsverbindung steht.

Um in dem Zentralsystem die Steuerungs-Kartendaten in ausreichender Aktualität und Genauigkeit bereitzustellen, werden bisher die Strecken des Streckennetzes mit speziellen Messfahrzeugen abgefahren und die benötigten Daten erfasst, um die dort vorliegenden Steuerungs-Kartendaten zu korrigieren bzw. zu aktualisieren. Daher sieht ein Ansatz vor, die für das teil- oder bzw. vollautomatisierte Fahren benötigten Steuerungs-Kartendaten durch Flottendaten zu aktualisieren, d.h. Fahrzeugdaten, die von einer Vielzahl von Kraftfahrzeugen erfasst werden und an das Zentralsystem übermittelt werden. Diese aktualisiert dann die Steuerungs-Kartendaten, die den Kraftfahrzeugen auf Anfrage bereitgestellt werden. In dem Zentralsystem müssen daher eine große Menge von Fahrzeugdaten verarbeitet werden, was in der Regel durch einen Zusammenschluss von einzelnen spezialisierten Rechnern erfolgt.

Bisher werden die erfassten Fahrzeugdaten in Aktualisierungsrechnern weiter verarbeitet, wozu der Aktualisierungsrechner vom Speicherrechner die zur aktuellen Fahrzeugposition passenden Kartendaten lädt, diese mit den Informationen aus den Fahrzeugdaten aktualisiert und die aktualisierten Kartendaten an den betreffenden Speicherrechner zurückübermittelt. Diese Vorgehensweise hat den Nachteil, dass durch die Übertragung der Steuerungs-Kartendaten aus den Speicherrechnern eine hohe Bandbreite benötigt wird. Dadurch wird bei der Verarbeitung der Steuerungs-Kartendaten durch die Datenmenge bzw. die notwendigen Zugriffe auf die Steuerungs-Kartendaten die Bearbeitungsgeschwindigkeit für eine sinnvolle semantische Verarbeitung der Fahrzeugdaten reduziert, wodurch die Gesamtleistungsfähigkeit bei gegebenen Rechen- bzw. Speicherkapazitäten beschränkt ist.

Die Druckschrift US 2014/0278055 A1 offenbart ein System zur Aktualisierung von Straßenkarten mit einem Prozessor, einer Datenbank zum Speichern der Straßenkarten, einem Kartenanpassungsmodul zum Abgleichen einer Anzahl von GPS-Spuren mit einer Anzahl von Straßen, einem ersten Segmentmodul, das ausgebildet ist, um die GPS-Spuren zu verarbeiten, die mit einer Untermenge der Anzahl der Straßen übereinstimmen, einem zweiten Segmentmodul, das ausgebildet ist, die GPS-Spuren zu verarbeiten, die nicht mit Straßen aus der Anzahl der Straßen übereinstimmen, und einem Kartenaktualisierungsmodul, das ausgebildet ist, eine Anzahl von Straßen abhängig von den vorgeschlagenen Änderungen, die durch das erste Segmentmodul und das zweite Segmentmodul präsentiert werden, zu aktualisieren.

Die Druckschrift US 2016/0028824 A1 offenbart ein Verfahren zum Empfangen von Telematik-Sensordaten von einem ersten Fahrzeug an einen ersten Server und Übertragung durch den Prozessor des ersten Servers mindestens eines Teils der Telematik-Sensordaten von dem entfernten ersten Server an den entfernten zweiten Server, wobei der entfernte zweite Server ausgebildet ist, eine autonome Fahranwendung mithilfe der empfangenen Telematik-Sensordaten auszuführen, wobei die autonome Fahranwendung ausgebildet ist, ein Autonomer-Fahrdienst-Ergebnis auszugeben, wobei das Autonomer-Fahrdienst-Ergebnis von dem entfernten zweiten Server an das zweite Fahrzeug übertragen wird.

Die Druckschrift US 2016/102988A1 offenbart ein Verfahren zum Erzeugen einer Route zu einem Ziel, umfassend die Schritte: Abrufen von ersten Kartenpartitionsdaten für ein erstes Gebiet von einem entfernten Computer, wobei die ersten Kartenpartitionsdaten mit Informationen zum Erzeugen von Fahrtrichtungen codiert sind; anschließendes Bestimmen, ob der entfernte Computer zugänglich ist; wenn der entfernte Computer zugänglich ist, Abrufen, von zweiten Kartenpartitionsdaten für ein zweites Gebiet von dem entfernten Computer, wobei die zweiten Kartenpartitionsdaten mit Informationen zum Erzeugen von Fahrtrichtungen kodiert sind; anschließndes Bestimmen, ob der entfernte Computer zugänglich ist; wenn festgestellt wird, dass der entfernte Computer nicht zugänglich ist, Zusammenstellen von Kartendaten, die eine geographische Region repräsentieren, wobei die Kartendaten eine Zusammenstellung der ersten Kartenpartitionsdaten und der zweiten Kartenpartitionsdaten sind; und Erzeugen einer Route zu einem Ziel unter Verwendung der Kartendaten.

Die Druckschrift DE102008053531A1 offenbart ein Bewertungsmodul zur Bewertung von Daten einer digitale Karte für ein Fahrzeug, umfassend: eine Recheneinheit zur Entgegennahme von Daten der digitalen Karte und zur Durchführung der Bewertung der Daten auf Basis einer karteneigenen Qualitätsinformation und/oder auf Basis von Messdaten einer Umfeldsensorik des Fahrzeugs; und eine Schnittstelle zur Übergabe der Bewertung an ein Fahrerassistenzsystem und/oder ein Sicherheitssystem des Fahrzeugs, welches die Daten der digitalen Karte auf Basis der Bewertung verwendet.

Es ist daher die Aufgabe der vorliegenden Erfindung, ein Verfahren zum Betreiben eines Zentralsystems, das zum Bereitstellen von aktualisierten Kartendaten dient, zur Verfügung zu stellen, mit dem eine effizientere Verarbeitung der Fahrzeugdaten möglich ist.

### Offenbarung der Erfindung

Diese Aufgabe wird durch das Verfahren zum Betreiben eines Zentralsystems zum Bereitstellen von aktualisierten Kartendaten gemäß dem unabhängigen Anspruch 1 sowie durch das Zentralsystem gemäß dem unabhängigen Anspruch 5 gelöst.

Weitere Ausgestaltungen sind in den abhängigen Ansprüchen angegeben.

Gemäß einem ersten beispielhaften Aspekt der Offenbarung ist ein Verfahren zum Bereitstellen von Kartendaten durch ein Zentralsystem an ein Kraftfahrzeug vorgesehen, mit folgenden Schritten:
- Erfassen von Fahrzeugdaten von sich bewegenden Kraftfahrzeugen und Übermitteln an eine Prozessrecheneinrichtung des Zentralsystems, wobei die Fahrzeugdaten mit einem entsprechenden Positionsstempel versehen ist, der eine aktuelle den jeweiligen Fahrzeugdaten zugeordnete Fahrzeugposition abgibt,
- Abrufen einer Fahrsituation von einer Speicherrecheneinrichtung abhängig von der den Fahrzeugdaten zugeordneten Fahrzeugposition durch die Prozessrecheneinrichtung;
- Auswählen mindestens eines Analysealgorithmus für die Fahrsituation;
- Übermitteln des Analysealgorithmus oder einer entsprechenden Angabe zusammen mit den Fahrzeugdaten an die Speicherrecheneinrichtung;
- Ausführen des Analysealgorithmus basierend auf den Fahrzeugdaten in der Speicherrecheneinrichtung, um die Kartendaten zu aktualisieren.

Weiterhin wird gemäß der vorliegenden Erfindung einer von mehreren Speicherrechnern der Speicherrecheneinrichtung abhängig von der Fahrzeugposition und/oder der Fahrsituation ausgewählt, und der Analysealgorithmus wird basierend auf den Fahrzeugdaten in dem ausgewählten Speicherrechner ausgeführt.

Eine Idee des obigen Verfahrens zum Betreiben eines Zentralsystems zum Bereitstellen von aktualisierten Kartendaten besteht darin, in einer Prozessrecheneinrichtung, in der die Fahrzeugdaten einschließlich den jeweiligen Fahrzeugpositionen (Geoposition) der erfassenden Kraftfahrzeuge benutzt wird, um denjenigen von mehreren Speicherrechnern einer Speicherrecheneinrichtung zu identifizieren, der die zur Fahrzeugposition zugehörige Kartenfläche speichert, und an diesen einen oder mehrere Topologieabhängige Algorithmen bzw. Algorithmusidentifikationdaten gemeinsam mit den Fahrzeugdaten zu übertragen, so dass in dem betreffenden Speicherrechner die Aktualisierung der Kartendaten an der betreffenden Fahrzeugposition abhängig von der dort vorherrschenden Fahrstreckentopologie vorgenommen werden kann.

Auf diese Weise kann die Verarbeitung der Fahrzeugdaten verteilt in dem Cluster aus Speicherrechnern ausgeführt werden, ohne dass die Kartendaten zwischen der Prozessrecheneinrichtung und der Speicherrecheneinrichtung übertragen werden müssen. Auf diese Weise können die Kartendaten mit geringem Rechenkapazitätsbedarf aktualisiert werden.

Weiterhin kann die Fahrsituation in der Speicherrecheneinrichtung für jede mögliche Fahrzeugposition vorab durch ein Klassifizierungsverfahren bestimmt werden oder wobei die Fahrsituation in der Speicherrecheneinrichtung abhängig von der Fahrzeugposition durch ein Klassifizierungsverfahren bestimmt wird, unmittelbar bevor die Fahrsituation durch die Prozessrecheneinrichtung abgerufen wird.

Es kann vorgesehen sein, dass die Fahrzeugdaten vor der Übermittlung an die Speicherrecheneinrichtung entweder in der Prozessrecheneinrichtung oder in demjenigen Kraftfahrzeug abhängig von der vorliegenden Fahrsituation vorverarbeitet werden.

Insbesondere kann eine Verteilung der Vorverarbeitung der Fahrzeugdaten zwischen einem Steuersystem des jeweiligen Kraftfahrzeugs und der Prozessrecheneinrichtung abhängig von der Fahrsituation dynamisch durchgeführt werden.

Gemäß einem weiteren beispielhaften Aspekt der Offenbarung ist ein Zentralsystem zum Bereitstellen von Kartendaten an ein Kraftfahrzeug vorgesehen, umfassend:
- eine Prozessrecheneinrichtung, die ausgebildet ist,
   ∘ um Fahrzeugdaten von sich bewegenden Kraftfahrzeugen zu erfassen, wobei die Fahrzeugdaten mit einem entsprechenden Positionsstempel versehen sind, der eine aktuelle den jeweiligen Fahrzeugdaten zugeordnete Fahrzeugposition abgibt,
   ∘ um eine Fahrsituation von einer Speicherrecheneinrichtung abhängig von der den Fahrzeugdaten zugeordneten Fahrzeugposition abzurufen;
   ∘ mindestens einen Analysealgorithmus für die Fahrsituation auszuwählen;
   ∘ den Analysealgorithmus oder eine entsprechende Angabe zusammen mit den Fahrzeugdaten an eine Speicherrecheneinrichtung zu übermitteln;
- die Speicherrecheneinrichtung, die ausgebildet ist, um den Analysealgorithmus basierend auf den Fahrzeugdaten auszuführen, um die Kartendaten zu aktualisieren.

### Kurzbeschreibung der Zeichnungen

Ausführungsformen werden nachfolgend anhand der beigefügten Zeichnungen näher erläutert. Es zeigen:
- Figur 1: eine schematische Darstellung eines Zentralsystems einschließlich einer Kommunikation mit einem Kraftfahrzeug; und
- Figur 2: ein Flussdiagramm zur Veranschaulichung eines Verfahrens zum Betreiben des Zentralsystems.

### Beschreibung von Ausführungsformen

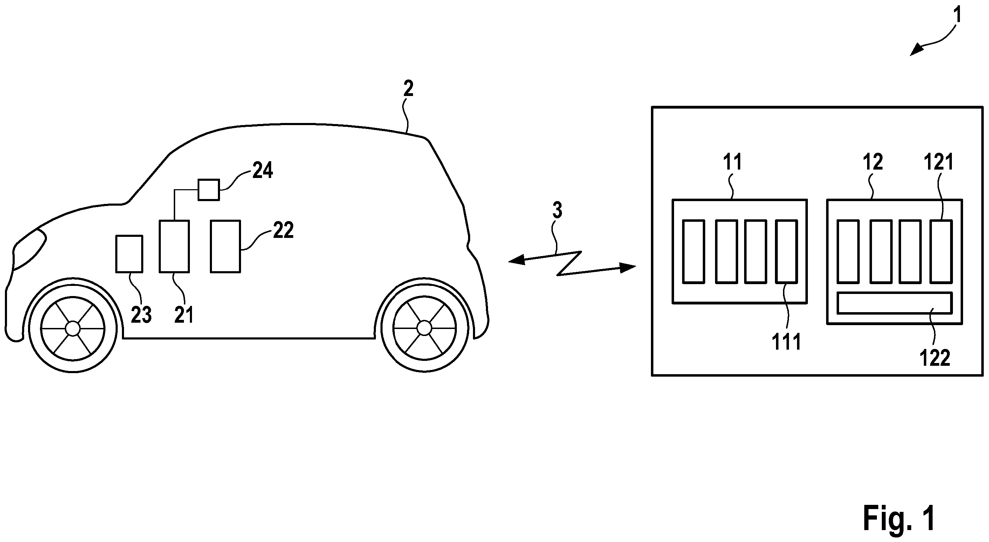

Figur 1 zeigt eine schematische Darstellung eines Zentralsystems 1 zur Bereitstellung von hochgenauen aktuellen Kartendaten an Kraftfahrzeuge im Betrieb. Die hochgenauen aktuellen Kartendaten dienen zur Durchführung und/oder Unterstützung von Fahrzeugfunktionen für teil- oder vollautomatisiertes Fahren.

Das Bereitstellen erfolgt mit Hilfe einer Datenkommunikationsverbindung 3 an die Kraftfahrzeuge, von denen eines beispielhaft dargestellt ist. Die Datenkommunikationsverbindung 3 kann eine an sich bekannte Datenverbindung, insbesondere eine paketgebundene Datenverbindung, aufweisen.

Weiterhin weist das Kraftfahrzeug 2 ein Steuersystem 21 auf, das mit einer Kommunikationseinrichtung 22 gekoppelt ist, um Daten von dem Zentralsystem 1 über die Datenkommunikationsverbindung 3 zu empfangen oder Daten an das Zentralsystem 1 zu senden. Das Steuersystem 21 ist zur Ausführung der einen oder der mehreren Fahrzeugfunktionen vorgesehen, die hochgenaue Kartendaten benötigen und diese entsprechend über die Kommunikationseinrichtung 22 von dem Zentralsystem 1 anfordern können.

Weiterhin kann das Steuersystem 21 mit einer Fahrzeugsensorik 23 in Verbindung stehen, mit der Fahrzeugdaten erfasst werden können. Fahrzeugdaten können Betriebsdaten des Kraftfahrzeugs umfassen, wie beispielsweise Geschwindigkeit, Gierrate bzw. Lenkwinkel oder dergleichen, sowie Umgebungsdaten, die ein Kameraabbild der Umgebung, Radardaten, LiDAR-Daten umfassen können, sowie Wetterdaten, wie z.B. Temperatur, Feuchtigkeit, Witterungsbedingungen und dergleichen.

Weiterhin ist eine Positionsbestimmungseinheit 24 vorgesehen, mit der eine Fahrzeugposition (Geoposition bzw. GPS-Position) des Kraftfahrzeugs 2 in an sich bekannter Weise bestimmt werden kann, so dass die erfassten Fahrzeugdaten der entsprechenden Fahrzeugposition zugeordnet werden können. Auf diese Weise erhalten die Fahrzeugdaten jeweils einen Zeit- und Positionsstempel.

Das Zentralsystem 1 weist eine Prozessrecheneinrichtung 11 auf, die einen oder mehrere Prozessrechner 111 umfasst. Die Prozessrecheneinrichtung 11 empfängt die von dem Kraftfahrzeug mit Zeit- und Positionsstempel versehenen Fahrzeugdaten.

Weiterhin umfasst das Zentralsystem 1 eine Speicherrecheneinrichtung 12, die in der Regel mehrere Speicherrechner 121 umfasst, die jeweils zum Speichern von Teilstreckennetzen in Form von Teilkartendaten dienen, die jeweils einen geografischen Flächenabschnitt abbilden.

Dazu haben die Speicherrechner 121 Zugriff auf einen Kartenspeicher 122, aus dem Teilkartendaten des dem jeweiligen Speicherrechner statisch oder dynamisch zugeordneten Flächenabschnitts ausgelesen werden können.

Die Prozessrecheneinrichtung 11 ist mit der Speicherrecheneinrichtung 12 verbunden, um Fahrzeugdaten zusammen mit dem Zeit- und Positionsstempel zu übermitteln, so dass die Speicherrecheneinrichtung 12 basierend auf der durch den Positionsstempel angegebenen Fahrzeugposition der Fahrzeugdaten oder basierend auf einem an sich bekannten Lastverteilungsalgorithmus einen der Speicherrechner 121 zur Verarbeitung der Fahrzeugdaten auswählt. Die Prozessrecheneinrichtung 11 übermittelt weiterhin einen Analysealgorithmus für die aktuelle Fahrzeugsituation entsprechend einer durch den Speicherrechner 121 für die betreffende Fahrzeugposition identifizierten Fahrsituation und übermittelt die Fahrzeugdaten gemeinsam mit dem der Fahrsituation zugeordneten Aktualisierungsalgorithmen. Auf diese Weise liegen in dem der Fahrzeugposition zugeordneten Speicherrechner 121 die Fahrzeugdaten, der Analysealgorithmus für die jeweilige Fahrsituation sowie die zu aktualisierenden Teilkartendaten vor, so dass die Aktualisierung der Teilkartendaten in dem betreffenden Speicherrechner 121 vorgenommen werden kann. Dadurch wird die Prozessrecheneinrichtung 11 entlastet.

Die Fahrsituation gibt an, vor oder in welcher Streckentopologie sich ein Kraftfahrzeug an der aktuellen Fahrzeugposition und ggfs. der aktuellen Fahrtrichtung befindet. So kann die Fahrsituation durch Klassifizieren von Streckentopologien bestimmt werden und beispielsweise Kreuzungen, Einfahrten oder Ausfahrten von Fahrstrecken, Fahrspuren für verschiedene Fahrtrichtungen an Streckenverzweigungen, Verkehrsflusssteuerungen durch Beschilderung oder Signalanlagen und dergleichen angeben.

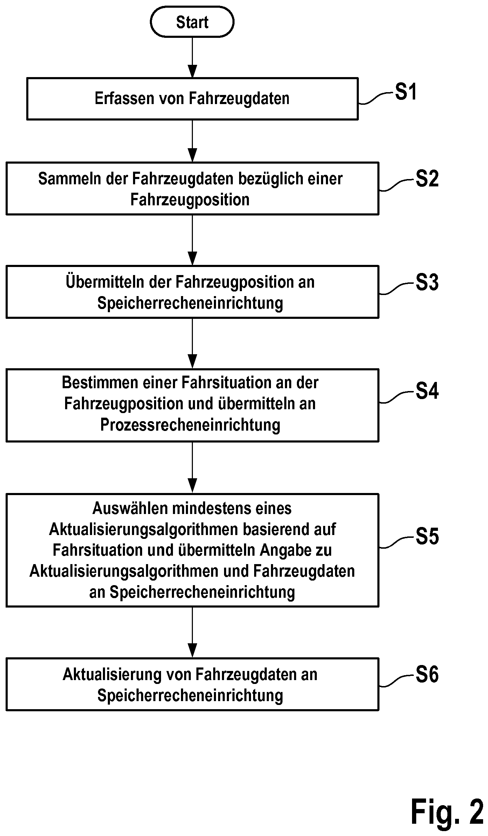

In Figur 2 ist ein Flussdiagramm zur Veranschaulichung des Verfahrens zur Aktualisierung der Kartendaten in dem Zentralsystem 1 dargestellt.

In Schritt S1 werden Fahrzeugdaten von sich bewegenden Fahrzeugen an die Prozessrecheneinrichtung 11 mit entsprechenden Zeit- und Positionsstempeln übermittelt.

In der Prozessrecheneinrichtung 11 werden in Schritt S2 die einer Fahrzeugposition zugeordneten Fahrzeugdaten von einem oder mehreren Fahrzeugen gesammelt, so dass für eine bestimmte Fahrzeugposition Fahrzeugdaten für ein oder mehrere Kraftfahrzeuge vorliegen.

In Schritt S3 werden die der zu verarbeitenden Fahrzeugdaten zugeordnete Fahrzeugposition an die Speicherrecheneinrichtung 12 übermittelt und dort derjenige Speicherrechner 121 identifiziert oder bestimmt, der die Aktualisierung der Teilkartendaten für das Teilstreckennetz, in dem sich die Fahrzeugposition befindet, vorgenommen werden soll. In der Speicherrecheneinrichtung kann vorab oder in Laufzeit eine Kategorisierung der an der aktuellen Fahrzeugposition vorliegenden Fahrsituation vorgenommen werden.

In Schritt S4 übermittelt der ausgewählte Speicherrechner 121 eine der Fahrzeugposition zugeordnete Angabe zur Fahrsituation an die Prozessrecheneinrichtung 11.

Die Prozessrecheneinrichtung 11 wählt in Schritt S5 basierend auf der Angabe zur Fahrsituation eine oder mehrere Aktualisierungsalgorithmen für die Fahrsituation aus und übermittelt diese in einem nachfolgenden Schritt S6 gemeinsam mit den Fahrzeugdaten, die dieser Fahrzeugposition zugeordnet sind, an den betreffenden Speicherrechner 121 der Speicherrecheneinrichtung 12. Anstelle der Übertragung der Aktualisierungsalgorithmen kann auch eine Algorithmusidentifikationsinformation übertragen werden, so dass der betreffende Speicherrechner 121 den benötigten Analysealgorithmus aus anderen Quellen abrufen bzw. erhalten kann.

In der Prozessrecheneinrichtung 11 kann eine Aufbereitung der empfangenen Fahrzeugdaten abhängig von der bezüglich der Fahrzeugposition zugeordneten und in Schritt S4 übermittelten Fahrsituation vorgenommen werden. Alternativ oder zusätzlich kann eine Angabe über die Art einer Aufbereitung der Fahrzeugdaten bzw. die Angabe über eine Fahrsituation an das betreffende Kraftfahrzeug 2 übermittelt werden, so dass bereits dort vor der Übertragung an das Zentralsystem eine Aufbereitung der Fahrzeugdaten dezentral vorgenommen werden kann. Alternativ kann eine Aufbereitung der Fahrzeugdaten von durch das Fahrzeug 2, d.h. durch das Steuersystem 21 erkannte Fahrsituation automatisch vorgenommen werden, so dass die Fahrzeugdaten in entsprechender Weise aufbereitet sind.

Beispiele für die Aktualisierung der Kartendaten können beispielsweise vorsehen, dass bei einer Fahrsituation, die eine Autobahnausfahrt angibt, Kameradaten ausgewertet werden, um Geschwindigkeitsbegrenzungsschilder zu identifizieren und dem weiteren Verlauf der Autobahn und der abzweigenden Ausfahrt unterschiedliche Geschwindigkeitsbegrenzungen zuordnen zu können. Auf diese Weise kann vorgesehen sein, dass als Fahrzeugdaten bezogen auf die Fahrsituation "Autobahnausfahrt" für den betreffenden Analysealgorithmus lediglich die Kamerainformation ausgewertet wird, die die Geschwindigkeitsbegrenzungsschilder anzeigt. Die Identifikation von Geschwindigkeitsbegrenzungsschildern kann im Kraftfahrzeug oder in der Prozessrecheneinrichtung 11 vorgenommen werden.

Alternativ kann beispielsweise bei einer Fahrsituation, die als eine Streckenkreuzung mit Lichtsignaleinrichtung identifiziert ist, durch Auswertung der Kamerabilder erkannte Lichtsignaleinrichtungen verschiedenen Fahrspuren der Streckenkreuzung zugeordnet werden.

Gemäß einer weiteren Ausführungsform kann vorgesehen sein, dass eine Verteilung der Aufbereitung der Fahrzeugdaten zwischen dem Steuersystem 21 des jeweiligen Fahrzeugs und der Prozessrecheneinrichtung 11 abhängig von der Fahrsituation dynamisch erfolgen kann und die Aufbereitung der Fahrzeugdaten entsprechend einem abrufbaren Aufbereitungsalgorithmus vorgenommen werden kann.

### Bezugszeichenliste

- 1: Zentralsystem
- 2: Kraftfahrzeug
- 3: Datenkommunikationsverbindung
- 21: Steuersystem
- 22: Kommunikationseinrichtung
- 23: Fahrzeugsensorik
- 24: Positionsbestimmungseinheit
- 11: Prozessrecheneinrichtung
- 111: Prozessrechner
- 12: Speicherrecheneinrichtung
- 121: Speicherrechner
- 122: Kartenspeicher

## Patentansprüche

1. Verfahren zum Bereitstellen von Kartendaten durch ein Zentralsystem (1) an ein Kraftfahrzeug (2), wobei das Zentralsystem (1) eine Prozessrecheneinrichtung (11), die einen oder mehrere Prozessrechner (111) umfasst, und eine Speicherrecheneinrichtung (12) aufweist, die mehrere Speicherrechner (121) umfasst, die jeweils zum Speichern von Teilstreckennetzen in Form von Teilkartendaten dienen, die jeweils einen geografischen Flächenabschnitt abbilden, mit folgenden Schritten:
- Erfassen (S1) von Fahrzeugdaten von sich bewegenden Kraftfahrzeugen (2) und Übermitteln an eine Prozessrecheneinrichtung (11) des Zentralsystems (1), wobei die Fahrzeugdaten mit einem entsprechenden Positionsstempel versehen sind, der eine aktuelle den jeweiligen Fahrzeugdaten zugeordnete Fahrzeugposition abgibt,
- Abrufen (S4) einer Fahrsituation von einer Speicherrecheneinrichtung (12) abhängig von der den Fahrzeugdaten zugeordneten Fahrzeugposition durch die Prozessrecheneinrichtung (11), wobei die Fahrsituation angibt, vor oder in welcher Streckentopologie sich ein Kraftfahrzeug an der aktuellen Fahrzeugposition befindet;
- Auswählen (S5) mindestens eines Analysealgorithmus entsprechend der Fahrsituation;
- Übermitteln (S5) des Analysealgorithmus oder einer entsprechenden Angabe zusammen mit den Fahrzeugdaten an die Speicherrecheneinrichtung (12), wobei einer von mehreren Speicherrechnern (121) der Speicherrecheneinrichtung (12) abhängig von der Fahrzeugposition und/oder der Fahrsituation ausgewählt wird;
- Ausführen des Analysealgorithmus basierend auf den Fahrzeugdaten in dem ausgewählten Speicherrechner (121) der Speicherrecheneinrichtung (12), um die Kartendaten zu aktualisieren (S6).

2. Verfahren nach Anspruch 1, wobei die Fahrsituation in der Speicherrecheneinrichtung (12) für jede mögliche Fahrzeugposition vorab durch ein Klassifizierungsverfahren bestimmt wird oder wobei die Fahrsituation in der Speicherrecheneinrichtung (12) abhängig von der Fahrzeugposition durch ein Klassifizierungsverfahren bestimmt wird, unmittelbar bevor die Fahrsituation durch die Prozessrecheneinrichtung (11) abgerufen wird.

3. Verfahren nach einem der Ansprüche 1 bis 2, wobei die Fahrzeugdaten vor der Übermittlung an die Speicherrecheneinrichtung (12) entweder in der Prozessrecheneinrichtung (11) oder in demjenigen Kraftfahrzeug (2) abhängig von der vorliegenden Fahrsituation vorverarbeitet werden.

4. Verfahren nach Anspruch 3, wobei eine Verteilung der Vorverarbeitung der Fahrzeugdaten zwischen einem Steuersystem (21) des jeweiligen Kraftfahrzeugs (2) und der Prozessrecheneinrichtung 11 abhängig von der Fahrsituation dynamisch durchgeführt wird.

5. Zentralsystem (1) zum Bereitstellen von Kartendaten an ein Kraftfahrzeug (2), umfassend:
- eine Prozessrecheneinrichtung (11), die einen oder mehrere Prozessrechner (111) umfasst und die ausgebildet ist,
∘ um Fahrzeugdaten von sich bewegenden Kraftfahrzeugen (2) zu erfassen, wobei die Fahrzeugdaten mit einem entsprechenden Positionsstempel versehen sind, der eine aktuelle den jeweiligen Fahrzeugdaten zugeordnete Fahrzeugposition abgibt,
∘ um eine Fahrsituation von einer Speicherrecheneinrichtung (11) abhängig von der den Fahrzeugdaten zugeordneten Fahrzeugposition abzurufen;
∘ mindestens einen Analysealgorithmus entsprechend der Fahrsituation auszuwählen;
∘ den Analysealgorithmus oder eine entsprechende Angabe zusammen mit den Fahrzeugdaten an eine Speicherrecheneinrichtung (12) zu übermitteln, wobei einer von mehreren Speicherrechnern (121) der Speicherrecheneinrichtung (12) abhängig von der Fahrzeugposition und/oder der Fahrsituation ausgewählt wird;
- die Speicherrecheneinrichtung (12), die mehrere Speicherrechner (121) umfasst, die jeweils zum Speichern von Teilstreckennetzen in Form von Teilkartendaten dienen, die jeweils einen geografischen Flächenabschnitt abbilden, wobei die Speicherrecheneinrichtung (12) ausgebildet ist, um den Analysealgorithmus basierend auf den Fahrzeugdaten in dem ausgewählten Speicherrechner (121) auszuführen, um die Kartendaten zu aktualisieren.

## Claims

1. Method for providing map data by way of a central system (1) to a motor vehicle (2), wherein the central system (1) has a process computing device (11) comprising one or more process computers (111), and a memory computing device (12) comprising a plurality of memory computers (121), each serving to store partial route networks in the form of partial map data, each representing a geographical area section, comprising the following steps:
- capturing (S1) vehicle data from moving motor vehicles (2) and transmitting them to a process computing device (11) of the central system (1), wherein the vehicle data are provided with a corresponding position stamp, which delivers a current vehicle position assigned to the respective vehicle data,
- retrieving (S4) a driving situation from a memory computing device (12) depending on the vehicle position assigned to the vehicle data by way of the process computing device (11), wherein the driving situation indicates the route topology before or in which a motor vehicle is located at the current vehicle position;
- selecting (S5) at least one analysis algorithm according to the driving situation;
- transmitting (S5) the analysis algorithm or a corresponding indication together with the vehicle data to the memory computing device (12), wherein one of a plurality of memory computers (121) of the memory computing device (12) is selected depending on the vehicle position and/or the driving situation;
- implementing the analysis algorithm on the basis of the vehicle data in the selected memory computer (121) of the memory computing device (12) in order to update the map data (S6).

2. Method according to Claim 1, wherein the driving situation in the memory computing device (12) is determined beforehand by a classification method for each possible vehicle position or wherein the driving situation in the memory computing device (12) is determined by a classification method depending on the vehicle position directly before the driving situation is retrieved by the process computing device (11).

3. Method according to either of Claims 1 and 2, wherein the vehicle data before transmission to the memory computing device (12) are preprocessed either in the process computing device (11) or in that motor vehicle (2) depending on the present driving situation.

4. Method according to Claim 3, wherein a distribution of the preprocessing of the vehicle data between a control system (21) of the respective motor vehicle (2) and the process computing device (11) is carried out dynamically depending on the driving situation.

5. Central system (1) for providing map data to a motor vehicle (2), comprising:
- a process computing device (11) comprising one or more process computers (111) and designed
o to capture vehicle data from moving motor vehicles (2), wherein the vehicle data are provided with a corresponding position stamp, which delivers a current vehicle position assigned to the respective vehicle data,
∘ to retrieve a driving situation from a memory computing device (11) depending on the vehicle position assigned to the vehicle data;
∘ to select at least one analysis algorithm according to the driving situation;
∘ to transmit the analysis algorithm or a corresponding indication together with the vehicle data to a memory computing device (12), wherein one of a plurality of memory computers (121) of the memory computing device (12) is selected depending on the vehicle position and/or the driving situation;
- the memory computing device (12) comprising a plurality of memory computers (121), each serving to store partial route networks in the form of partial map data, each representing a geographical area section, wherein the memory computing device (12) is designed to implement the analysis algorithm on the basis of the vehicle data in the selected memory computer (121) in order to update the map data.

## Revendications

1. Procédé permettant de fournir des données cartographiques par un système central (1) à un véhicule automobile (2), dans lequel le système central (1) comprend un dispositif informatique de processus (11) qui comprend un ou plusieurs ordinateurs de processus (111), et présente un dispositif informatique de stockage (12) qui comprend plusieurs ordinateurs de stockage (121) qui servent respectivement à stocker des réseaux d'itinéraires partiels sous la forme de données cartographiques partielles qui représentent respectivement une partie de superficie géographique, comprenant les étapes consistant à :
- détecter (S1) des données de véhicule de véhicules automobiles (2) en mouvement, et les transmettre à un dispositif informatique de processus (11) du système central (1), dans lequel les données de véhicule sont munies d'une marque de position correspondante qui sort une position de véhicule actuelle, associée aux données de véhicule respectives,
- extraire (S4) une situation de conduite d'un dispositif informatique de stockage (12) en fonction de la position de véhicule associée aux données de véhicule par le dispositif informatique de processus (11), la situation de conduite indiquant avant ou dans quelle topologie d'itinéraire un véhicule automobile se trouve dans la position de véhicule actuelle ;
- sélectionner (S5) au moins un algorithme d'analyse selon la situation de conduite ;
- transmettre (S5) l'algorithme d'analyse ou une indication correspondante conjointement avec les données de véhicule au dispositif informatique de stockage (12), dans lequel l'un parmi plusieurs ordinateurs de stockage (121) du dispositif informatique de stockage (12) est sélectionné en fonction de la position de véhicule et/ou de la situation de conduite ;
- exécuter l'algorithme d'analyse sur la base des données de véhicule dans l'ordinateur de stockage (121) sélectionné du dispositif informatique de stockage (12) pour mettre à jour les données cartographiques (S6).

2. Procédé selon la revendication 1, dans lequel la situation de conduite est déterminée à l'avance dans le dispositif informatique de stockage (12) pour chaque position de véhicule possible par un procédé de classification, ou dans lequel la situation de conduite est déterminée dans le dispositif informatique de stockage (12) en fonction de la position de véhicule par un procédé de classification immédiatement avant que la situation de conduite ne soit extraite par le dispositif informatique de processus (11).

3. Procédé selon l'une quelconque des revendications 1 à 2, dans lequel les données de véhicule sont prétraitées avant la transmission au dispositif informatique de stockage (12), soit dans le dispositif informatique de processus (11), soit dans le véhicule automobile (2) respectif selon la situation de conduite présente.

4. Procédé selon la revendication 3, dans lequel une répartition du prétraitement des données de véhicule entre un système de commande (21) du véhicule automobile (2) respectif et le dispositif informatique de processus (11) est effectuée de manière dynamique en fonction de la situation de conduite.

5. Système central (1) permettant de fournir des données cartographiques à un véhicule automobile (2), comprenant :
- un dispositif informatique de processus (11) qui comprend un ou plusieurs ordinateurs de processus (111) et qui est réalisé pour
∘ détecter des données de véhicule de véhicules automobiles (2) en mouvement, dans lequel les données de véhicule sont munies d'une marque de position correspondante qui sort une position de véhicule actuelle, associée aux données de véhicule respectives, ∘ extraire une situation de conduite d'un dispositif informatique de stockage (11) en fonction de la position de véhicule associée aux données de véhicule ;
∘ sélectionner au moins un algorithme d'analyse selon la situation de conduite ;
∘ transmettre l'algorithme d'analyse ou une indication correspondante conjointement avec les données de véhicule au dispositif informatique de stockage (12), dans lequel l'un parmi plusieurs ordinateurs de stockage (121) du dispositif informatique de stockage (12) est sélectionné en fonction de la position de véhicule et/ou de la situation de conduite ;
- le dispositif informatique de stockage (12) qui comprend plusieurs ordinateurs de stockage (121) qui servent respectivement à stocker des réseaux d'itinéraires partiels sous la forme de données cartographiques partielles qui représentent respectivement une partie de superficie géographique, dans lequel le dispositif informatique de stockage (12) est réalisé pour exécuter l'algorithme d'analyse sur la base des données de véhicule dans l'ordinateur de stockage (121) sélectionné pour mettre à jour les données cartographiques.
